Europäisches Patentamt

European Patent Office

Office européen des brevets

(19)

(11) Publication number: **0 121 751**
**A1**

# EUROPEAN PATENT APPLICATION

(21) Application number: 84102333.6

(22) Date of filing: 05.03.84

(51) Int. Cl.³: **A 01 F 29/00**

(30) Priority: **11.03.83 IT 4153683**

(43) Date of publication of application: **17.10.84**
**Bulletin 84/42**

(84) Designated Contracting States: **DE FR GB**

(71) Applicant: **SEKO S.p.A., Via Gorizia, 90,**
**I-35010 Curtarolo (Province of Padova) (IT)**

(72) Inventor: **Loppoli, Giuseppe, Via Regina Margherita, 30,**
**I-35010 Gramtorto (Padova) (IT)**
Inventor: **Zago, Lino, Via Brenta, 30, I-35010 Campo San**
**Martino (Padova) (IT)**

(74) Representative: **Modiano, Guido et al, MODIANO, JOSIF,**
**PISANTY & STAUB Modiano & Associati Via**
**Meravigli, 16, I-20123 Milan (IT)**

(54) Combination machine for treating hay and straw bales.

(57) The machine comprises a trailer for hooking behind a tractor, on a flatbed whereof is installed a rotatively driven drum-like hopper (6) adapted to be loaded with hay or straw bales. Mounted across the hopper bottom, along a diameter thereof, is a shaft (25) carrying a plurality of rotating knives (26) projecting through a grid (27) whose height is adjustable, said knives (26) being operative to chop the hay, or straw, and pass it to an underlying auger (46) extending parallel to the knife shaft. The auger has a diverging mouth (51) and discharges to a blower (52) provided with two conveyors, the one (54) for loading waggons or raised containers, and the other (55) for spreading hay over feedboxes or straw to form cattle beddings. The various members of the machine are driven through a power pick-up for connection to an agricultural machine, in turn driving a pumping unit operating hydraulic motors. Devices arranged to cooperate with the grid and chopping knives enable control of both the chopped output flow rate and size thereof.

## COMBINATION MACHINE FOR TREATING HAY AND STRAW BALES

This invention relates to a combination machine for treating hay and straw bales.

It is a known fact that round or square hay and straw bales, as formed when harvesting hay or straw, require nowadays to be chopped.

Currently known and used are machines capable of individually chopping either round or square bales, as are machines for supplying feedboxes or spreading the chopped output over cattle beddings.

Yet unheard of is, however, a machine which can perform different functions, as required for optimum cattle breeding in modern farming settlements.

It is an object of this invention is to provide a combination machine which can perform various functions required in cattle breeding.

Another object is to provide a combination machine which can chop hay bales both of the round and square types.

It is a further object of the invention to provide a machine which can chop hay or straw to a range of different sizes to suit their intended use.

A further object is to provide a combination machine which can spread the chopped product, either by loading it into waggon mixers, or distributing it directly into feedboxes, or scattering it to form cattle beddings.

Still another object of the invention is to provide a machine which incorporates drive systems of its own for connection to a tractor power take-off.

A not unimportant object of the invention is to provide a machine which has a simple construction, and includes no critical functional areas, thus minimizing maintenance requirements.

These and other objects, such as will be apparent hereinafter, are achieved by a combination machine for treating hay and straw bales, characterized in that it comprises a carriage (1) having a rotatively driven drum-like hopper (6,66) mounted thereon for loading therein hay and straw bunches, a rotary knife shaft (25,64) arranged across a hopper bottom and carrying projecting knives (26,65,85,86), means for adjustably supporting the bunch and restricting the interference thereof with said knives as well as for determing the chopped material size, said knife shaft (25,64) overlying an auger (46,91) connected to a blower (52,92) for feeding at least one conveyor (54,55), mechanical and hydraulic means being provided for driving the machine members.

Further features and advantages of the invention will be more readily understood from the following detailed description of some preferred embodiments, with reference to the accompanying exemplary drawings, where:

Figure 1 is a general side view of this machine;

Figure 2 is a top view of this machine;

Figure 3 is a three-quarter rear view of this machine;

Figure 4 is a view of the chopper knives and devices for changing the flow rate and size of the chopped output;

Figure 5 is an exploded view of the grid and the knives of the chopper device;

Figure 6 shows one of the supporting and guiding devices for the drum-like hopper;

Figure 7 is a general, sectional view of the chopper knives, chopped output advancing auger, and blower;

Figure 8 is an exploded view of a dual grid embodiment;

Figure 9 is a longitudinal section view of the dual grid for controlling the chopping action;

Figure 10 is a plan view of a modified embodiment of this machine;

Figure 11 is a partly sectional front view of the machine shown in Figure 10, taken in the direction shown by the arrow A;

Figure 12 is a fragmentary sectional view of the machine of Figure 10 in the region of the chopper knives to show the bale supporting arrangement;

Figure 13 is a fragmentary side view of a modified embodiment of the chopper knife assembly;

Figure 14 is a front view of the chopper knives of Figure 13; and

Figure 15 is a ghost plan view of the machine as a whole, showing an additive irrigation device.

Making reference to the drawing views, this machine comprises a load-bearing metal frame 1 having a wheel pair 2, a drawbar 3, and a jockey wheel 4.

Said frame 1 has a flatbed 5 mounting a cylindrical drum-like hopper 6 whereinto one hay bale or several straw bales may be introduced even random fashion.

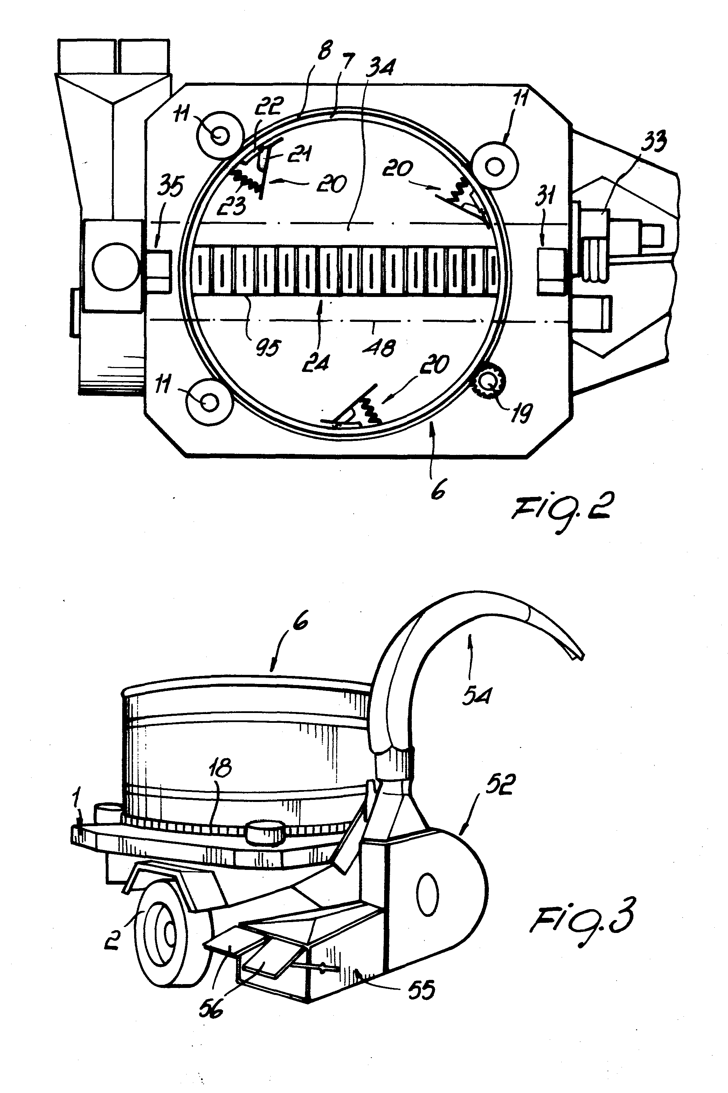

The cylindrical hopper 6, as shown more clearly in Figures 2 and 6, comprises a cylindrical wall, indicated at 7, to the lower peripheral edge whereof a "C" sectional member, indicated at 8, is welded, the bottom flange whereof, indicated at 9, is carried on four wheels 10 associated with the flatbed 5.

To prevent the hopper from being lifted and maintain rotation in a true circle, four guide rollers 11 are provided, whereof only there are visible in Figure 2, the fourth being omitted to show a detail of the means for rotatively driven the hopper 6, as it will be better explained later, which with a first smaller diameter region 12 guide the edge 13 of the "C" sectional member 8 and with a second region formed by a larger diameter flange 14 overlie the edge 13 preventing it from being lifted.

Each guide roller 11 is mounted on a slide 15 the position whereof is adjusted by a screw 16 engaging locknuts 16a and extending through a bracket 17 made rigid with the flatbed 5.

A drive chain 18 is accommodated within the "C" member 8, encircles the hopper completely and is mesh engaged by a drive pinion sprocket 19 which in the embodiment shown is mounted on the shaft supporting the flange 14 and is driven by a preferably hydraulic motor to move the whole hopper 6.

Said hopper 6 has three elastic wings mounted therein, as indicated at 20, which comprise a vertical blade 21 pivoted to an internal support 22 and being loaded by a spring 23.

Such elastic wings form means of engagement with and entrainment of hay or straw bales which are being introduced into the hopper 6 so as to force them to turn together with the hopper.

In the flatbed 5 an opening 95 is provided which extends along a diametrical line of the hopper 6 which in the embodiment shown coincides with the machine longitudinal centerline. Under and slightly protruding from the opening 95, a chopper device is provided, which is generally indicated at 24 in Figure 2 and further discussed hereinafter.

The chopper device 24 is shown in Figure 4 and comprises a driven shaft 25 which has a plurality of chopper knives 26 attached thereto in sets of four at preset spacings.

Such knives are caused to rotate through spaces provided by an arcuate grid 27 made up of plural metal arches 28 connected by two side stringers 29.

The side stringers 29 are connected, via a pair of metal tie bars 30, to a pair of jacks 31 and 35 which can raise and lower them and are driven by means of drive chains 32.

In particular, in order to effect the raising or

0121751

lowering movements in parallel, the jacks 31 and 35 are arranged each at a respective end of the grid 27, whereas the chains 32 receive their motion from a hydraulic motor shown in Figure 2 and indicated at 33, by means of a longitudinal driveshaft 34 spanning the whole machine.

The metal arches 28 forming the grid have a constant radius of curvature but the centers of curvature of the arches are arranged on a line laterally offset from the shaft 25 such that the knives can project increasingly farther as they rotate in the clockwise direction of Figure 4.

A hay bale is introduced into the hopper 6 to rest onto the grid 27, and the rotating knives 26 will penetrate the bale to an increasingly greater depth, thus removing material and chopping it against the edges of the grid 27.

A comb 36 comprising a plurality of metal pieces 37 mounted on a single axle 38 and spaced apart such that to project within the spaces defined by adjacent knives 26 can be brought more or less close to the knives by means of a lever 39 so as to determine the chopped output size. In practice the teeth of the comb 36 make a little resistance to the passage of the material and split the material with the desired size.

The height of the grid 27, or extent of the knife projection from the grid, will determine the throughput or amount of material being processed.

The combined grid 27 and comb 36 will, therefore, determine, on the one side, the material throughput, and on the other side, the size of the chopped material.

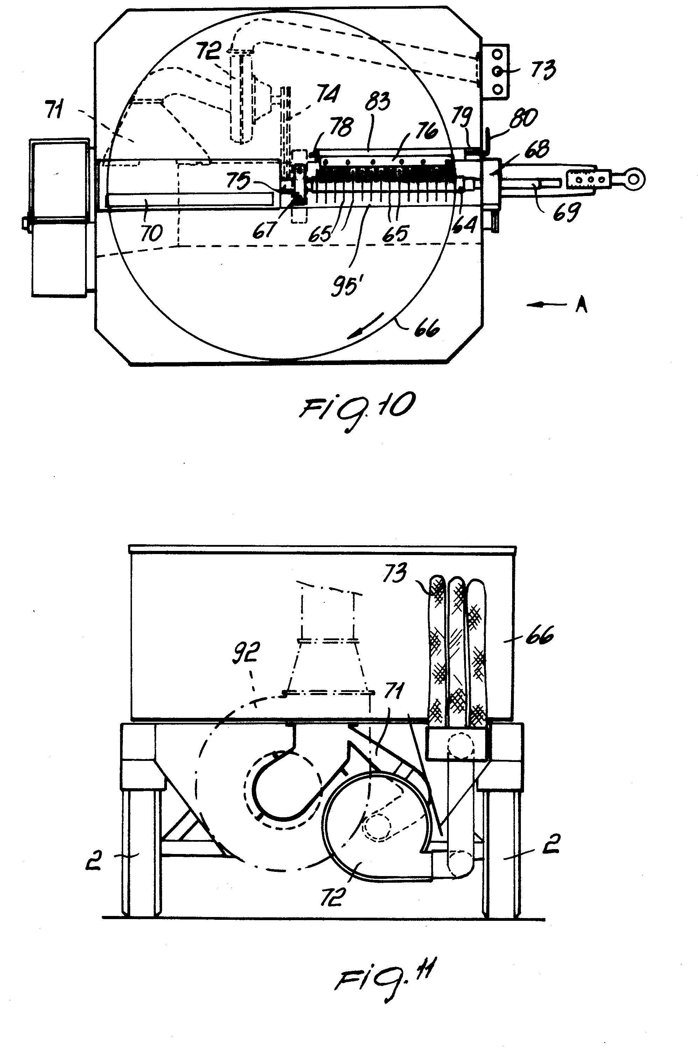

In a modified embodiment shown in Figure 8 and Figure 9, a pair of grids are provided, as indicated respectively at 40 and 41, wherein the former comprises a set of arches 42 mounted on two flat stringers 43 and inserted through the latter, also formed by arches 44 of a slightly larger size which are mounted on two longitudinal angle elements 45 enabling insertion of the stringers 43.

By mutually shifting the positions of the two grids 40 and 41, the working interspace for the knives indicated at 26 is determined, thus determining the chopped size, whereas by simultaneously lifting the grid pair 40,41, as inserted the one in the other, the amount of material being processed or throughput is determined.

The mutual displacement of the two grids may be accomplished in any desired way, e.g. by means of a dual screw control having a righthand located and lefthand located screw which are driven by an outside control and connected respectively by threaded sleeves to each of the two grids 40 and 41.

The chopped output is dropped from the knives 26 onto an auger conveyor 46 including a helix 47 attached to an axle 48 and contained within a conveying channel 49.

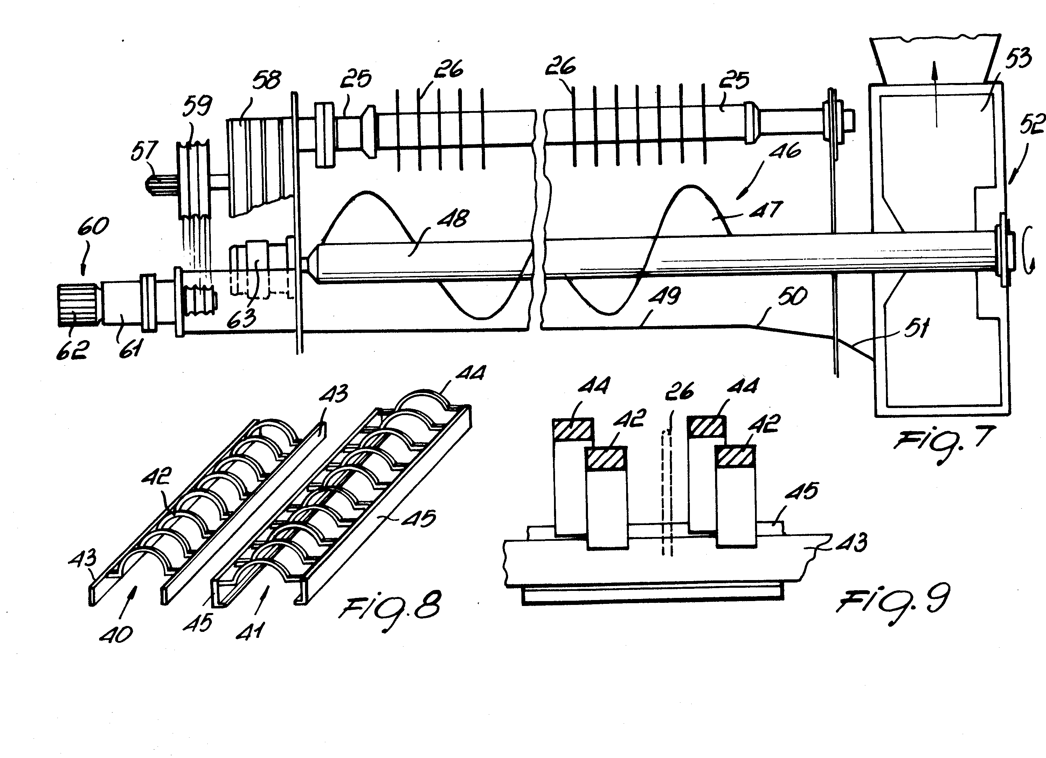

The helix drives the material toward the right end in Figure 7 where the channel 49 widens gradually into a first section 50 and is then connected to a diverging section 51 which delivers the material into a blower 52 having rotating blades 53 also attached rigidly to the axle 48.

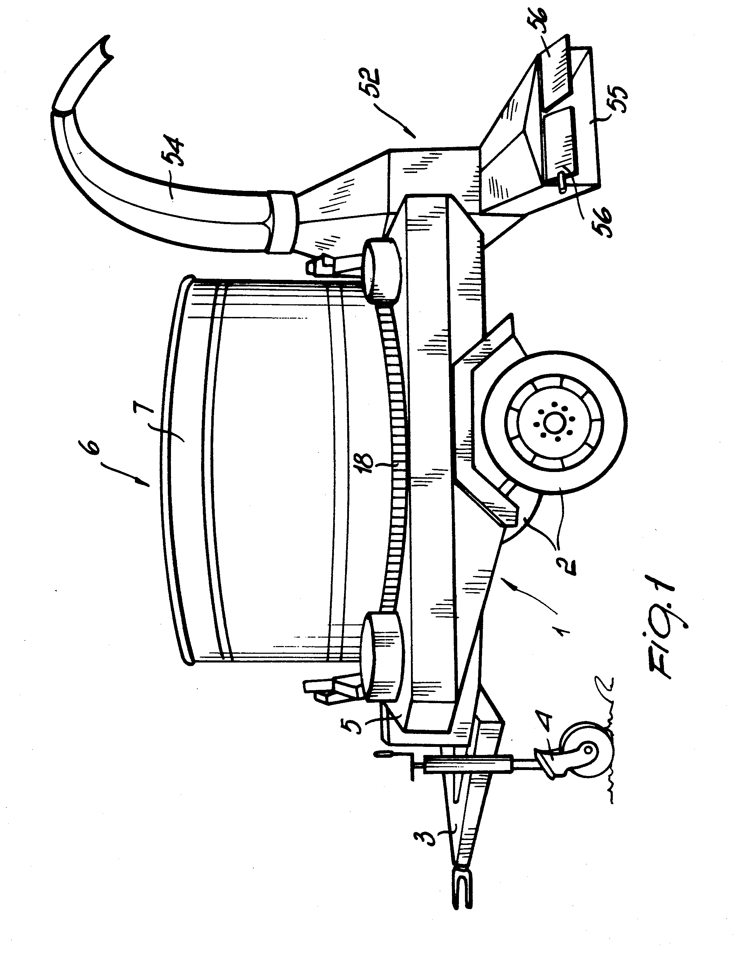

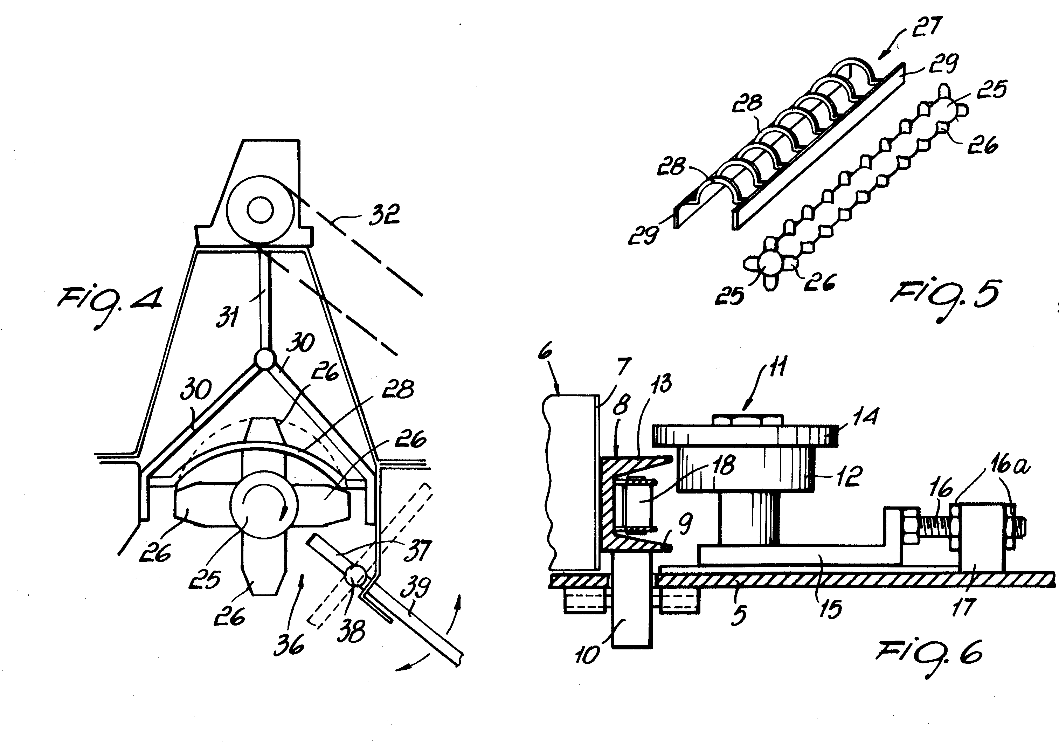

Said blower 52 is provided, as shown more clearly in Figures 1 and 3, with an upper conveyor 54 for unloading toward high locations such as waggon mixers, and a second lower horizontal conveyor 55 having adjustable baffles 56 either for taking the chopped material into feedboxes or spreading it to form a bedding.

Of course, the two conveyors will be operated alternatively, and sectors are provided to close one way and leave the other open.

The entire machine is driven by means of a power pick-up 57, Figure 7, which can be coupled to a machine such as a tractor which will drive the knife shaft 25 mechanically via a step-up gear 58.

Through a power take-off including pulleys 59, a pump unit 60 is driven which comprises two pumps keyed to a common axle and indicated at 61 and 62.

Such pumps generate an oil pressure which operates both the hydraulic motor which drives the pinion 19 and a second hydraulic motor indicated at 63 which drives the auger and also operates the blower 52, as well as the motor 33 (Figure 2) which drives the jacks 31 and 35 setting the height of the grid 27.

The machine is, therefore, totally self-sufficient, and the use of hydraulic motors affords different speeds, particularly for the motor 63, which allows hay to be projected at a high speed into the conveyor 54 where waggons are to be loaded, or by lowering the speed, to supply feedboxes through the conveyor 55, or by again increasing the speed, to throw the chopped output, such as finely chopped straw, away to form beddings.

Figures 10,11,12,13,14 and 15 illustrate modified embodiments of the inventive machine.

More particularly, shown in Figure 10 is a first variation wherein the knife shaft 64 carries now a plurality of knives 65 extending over just one half of the hopper 66 diameter under and slightly protruding from the opening 95'.

The shaft 64 is supported at the center of said diameter by a bearing 67 and receives its motion externally from a hydraulic drive 68 again driven through a power pick-up 69 which is coupled to the tractor PTO.

The half-diameter of the flatbed 5 not occupied by the opening 95' is occupied by a slot 70 which is in communication with the mouth 71 of a suction fan 72 blowing through a bank of filters 73.

The drive for said suction fan 72 is derived by means of belts 74 from the end 75 of the knife shaft 64.

That novel configuration of the machine is advantageous from several standpoints and with particular hay types.

In fact, it has been found experimentally that, if the material being entrained by the hopper meets the knives with a speed having a component with opposite direction to the speed of the knives at the moment of contact, then the maximum chopping efficiency is achieved.

When the material approaches instead the knife shaft moving in the same direction, then the knives instead of chopping the material tend to drag it around and thus clog up the spaces between knives, with an attendant loss of efficiency and possible jamming.

It is, therefore, highly advantageous for the machine efficiency that the knives be located only in the region where the movement set up by the hopper causes the material to move against the direction of movement of the knives.

Furthermore, thanks to the provision of the slot 70 the dusty matter contained in a bale being processed can be sucked out.

This is specially convenient when working within an enclosed space in order not to discharge dust to the environment which, as known, could be highly harmful for cattle.

Through the slot 70 provided at the suction area, any stones or heavy bodies contained in a bale are also allowed to drop, thus preventing them from contacting the knives and wear and damage them.

The embodiment according to Figures 10-12 shows further a different type of device adapted to support a bale being chopped.

In particular here the grid is formed by a pivotable element 76 connected to an axle 77 the ends whereof (see Figure 10) are, the one pivoted approximately at the center of the hopper 66 and indicated at 78, and the other, indicated at 79, is led out of the machine structure and connected through a linkage 80 to a mechanical drive which permits it to be moved and positioned between a higher position shown with dashed line and a lower position shown with continuous line.

The forward portion of the pivotable element 76 carries a replaceable comb 83 having teeth fitted among the knives 65.

Replaceability allows the installation of combs having either dents which fit between each knife disk, or every two knife disks, or every three knife disks.

This replaceability allows chopping to different lengths, depending on the type of material being processed or size to be obtained.

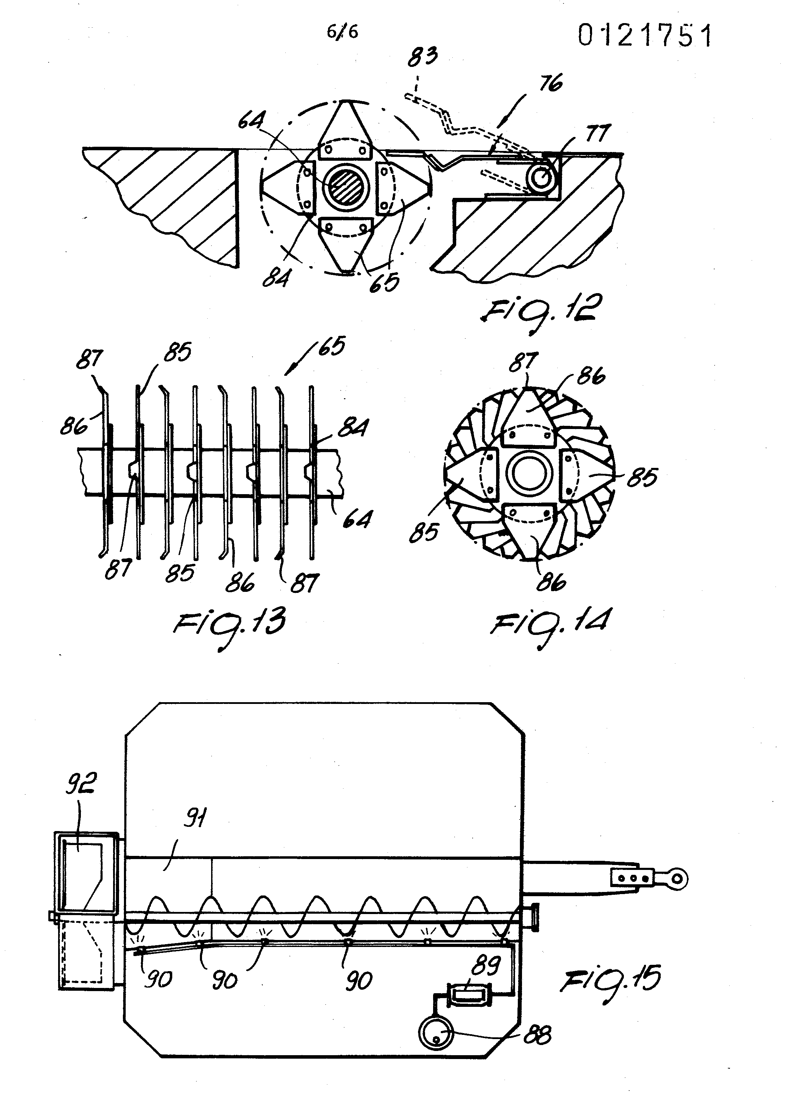

Location of the comb 83 between the two extreme positions shown in Figure 12 allows a bale to be kept more or less raised on the knives, which will determine the amount of material being processed.

Through a suitable control system, in the event of a jam occurring in the chopping device, the condition would be detected as a load change on the knife shaft drive, a device would bypass the hopper drive and stop it, and if necessary, a further device would control the comb raising allowing the bale to be moved away from the knives at least while the jam condition is being removed.

Shown in Figure 13 is the knife shaft 64, whereon parallel disks 84 are arranged at even spacings which carry each four knives, previously generally indicated at 65.

Such knives are of two types, and more particularly, two knives 85 located on one diameter are configured as isosceles triangles with their apices lying on the same lay as the knife.

The other two knives indicated at 86 are arranged to extend along a perpendicular diameter to that of the knives 85, and have their apices, indicated at 87, bent over for a certain portion.

It has been possible to observe that such a configuration affords improved penetration of a bale even where the latter gradually becomes smaller and applies a decreasing load on the knives.

The bent knife allows in this case constant penetration in the material until the bale is fully chopped up.

In Figure 14 a modification of the knife arrangement of Figure 13 is shown. In particular here the knives 85, 86, instead of being arranged on four lines, spaced of 90°, along the shaft 64, are arranged slightly offset with respect to the knives attached to the adjacent disks.

Figure 15 shows a further device mounted on the machine and comprising a tank 88 whence a metering pump 89 taps some liquid which is injected by means of nozzles 90 into the auger 91 which transports the material to the blower 92.

The product being injected is caustic soda or molasses, which are known to convert straw into a product having comparable characteristics to hay.

Injection of that liquid product takes place in the auger, where the chopped material is being transported, to achieve, through the continued stirring performed by the auger helix, a thorough homogenization of the mixture.

Mixing takes place, as may be seen, upon chopping, and accordingly, it is no longer necessary to arrange for distribution and mixing systems for such additives.

The machine as a whole, as may be seen from the foregoing description, has been conceived to serve a number of functions, all necessary to cattle breeding stations.

In fact, the machine can chop material in different amounts and to different sizes. This enables one machine to be used for chopping hay to an about 8 cm size for feeding cattle, or by inserting the comb 36, for chopping straw minutely to provide improved beddings and promote downgrading later on in the dunghill.

The provision of different conveyors enables delivery to waggon mixers or directly into feedboxes.

The nearly self-contained drive, in that dependent on a single power pick-up which generates **then,** an oil pressure which allows motors to be driven at different speeds, or variable speeds, confers on the machine a particular versatility and convenience of operation.

Thus, based on this same inventive idea, the various component parts of the machine may be implemented differently so long as they can serve the same functions and yield the same results.

Of course, the materials and dimensions may be any ones depending on individual requirements.

## CLAIMS

1. A combination machine for treating hay and straw bales, characterized in that it comprises a carriage having a rotatively driven drum-like hopper mounted thereon for loading therein hay and straw bunches, a rotary knife shaft arranged across a hopper bottom and carrying projecting knives, means for adjustably supporting the bunch and restricting the interference thereof with said knives as well as for determining the chopped material size, said knife shaft overlying an auger connected to a blower for feeding at least one conveyor, mechanical and hydraulic means being provided for driving the machine members.

2. A combination machine according to Claim 1, characterized in that said hopper comprises a drum having at the bottom a "C" sectional member encircling and being rigid with said drum, said sectional member resting on rollers pivoted at a flatbed of the carriage and being guided by peripherally arranged centering rollers, said "C" sectional member containing a chain in mesh engagement with a pinion sprocket for rotating said hopper.

3. A combination machine according to Claims 1-2, characterized in that said means for adjustably supporting the bale and restricting the interference thereof with said knives comprise at least one grid having metal arches attached to two side stringers connected to a pair of synchronously motor driven jacks raising and lowering said at least one grid relatively to said knives.

4. A machine according to Claims 1-3, characterized in that said metal arches are laid offcentered with respect to said knife shaft, thereby in operation, said knives are caused to penetrate increasingly more deeply hay resting on said grid.

5. A combination machine according to Claims 1-4, characterized in that said means for determining the chopped material size comprise a metal comb arranged for controlled insertion into a region under said grid, said comb being effective to exert an additional chopping action on hay.

6. A combination machine according to Claims 1-5, characterized in that it comprises a pair of grids inserted the one in the other and arranged at mutually adjustable positions and controllably raisable from said knives for adjusting the amount of material and determining the size of said material.

7. A combination machine according to Claims 1-6, characterized in that it comprises an auger conveyor extending substantially parallel to and underneath the knife shaft for picking up the chopped material and taking it to a blower keyed on an axis as said auger.

8. A combination machine according to Claims 1-7, characterized in that the auger conveyor comprises a channel having an increasingly larger cross-sectional area toward said blower from at least a point where an auger helix ends.

9. A combination machine according to Claims 1-8, characterized in that said blower is provided with two conveyors for alternative operation, one conveyor for discharging into waggon mixers comprising an upwardly arcuate square tube, and another conveyor being located at the bottom of the blower selectively for discharging into feedboxes and forming beddings.

10. A combination machine according to Claims 1-9, characterized in that it is driven through a power pick-up for coupling to an agricultural machine with tractor and connected directly to said knife shaft and indirectly, via drive belts, to a dual chamber hydraulic pump actuating individual hydraulic motors respectively for rotating said hopper, said auger, and said blower, and moving said grid jacks.

11. A combination machine according to Claims 1-10, characterized in that the knife shaft is arranged across the hopper bottom of circular shape along one half of a diameter thereof.

12. A machine according to Claims 1 and 11, characterized in that the directions of rotation of said knives and said hopper are selected to cause a bale to move in the opposite direction to the instantaneous direction of rotation of said knives at the contact point.

13. A combination machine according to Claim 11, characterized in that said diameter of said hopper bottom has a length thereof contiguous to said half whereat said knife shaft is arranged, said length presenting an air intake slot for collecting and filtering out dust from a bale.

14. A combination machine according to Claims 1-13, characterized in that at least some of said chopper

- 17 -

0121751

knives have a partly bent tip.

15. A combination machine according to Claim 8, characterized in that it comprises a plurality of nozzles arranged along said auger conveyor injecting an additive liquid product for hay.

Fig.1

0121751

Fig.2

Fig.3

0121751

Fig.5

Fig.6

Fig.4

Fig.7

Fig.8

Fig.9

Fig. 10

Fig. 11

Fig. 12

Fig. 13

Fig. 14

Fig. 15

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | US-A-3 966 128 (ANDERSON)<br><br>* Column 2, lines 15-68; column 3; column 4; column 5, lines 1-24; figures 1-4 *<br>--- | 1,2,5, 7,11, 12 | A 01 F 29/00 |
| X | US-A-4 003 502 (BARCELL)<br><br>* Column 3; column 4; column 5; column 6, lines 1-30; figures 1,3,4 *<br>--- | 1,2,11 ,13 | |
| A | US-A-3 483 906 (MOELLER)<br><br>----- | | |

| | TECHNICAL FIELDS SEARCHED (Int. Cl. ³) |
|---|---|
| | A 01 F<br>A 01 D |

The present search report has been drawn up for all claims

| Place of search | Date of completion of the search | Examiner |
|---|---|---|
| THE HAGUE | 21-06-1984 | VERMANDER R.H. |